# EUROPEAN PATENT APPLICATION

(11) **EP 4 661 343 A1**
(43) Date of publication of application: **10.12.2025**
(21) Application number: 23924886.7
(22) Date of filing: 25.08.2023
(51) Int. Cl.: H04L 12/18

(54) **METHOD, APPARATUS AND SYSTEM FOR ACCESSING GROUP**

(30) Priority: 28.02.2023 CN 202310217130
(71) Applicant: Huawei Technologies Co., Ltd., Shenzhen, Guangdong 518129 (CN)
(72) Inventor: GENG, Feng, Shenzhen, Guangdong 518129 (CN); CHEN, Xin, Shenzhen, Guangdong 518129 (CN); WANG, Ziyu, Shenzhen, Guangdong 518129 (CN); LI, Yong, Shenzhen, Guangdong 518129 (CN); DUAN, Li, Shenzhen, Guangdong 518129 (CN)
(74) Representative: Grünecker Patent- und Rechtsanwälte PartG mbB
(86) International application number: PCT/CN2023/115092
(87) International publication number: WO 2024/178929

(57) **Abstract**

This application discloses a group access method, apparatus, and system, and belongs to the field of communication security. A trusted device held by a group member registers a temporary group account used to access a group and a temporary password for logging in to the temporary group account, encrypts, via a key obtained based on the temporary password, temporary identity information used by the temporary group account to access the group, and stores an obtained ciphertext on an identity management platform. When the group member accesses the group by using another device, an access device obtains the temporary group account and the temporary password, obtains the corresponding ciphertext from the identity management platform based on the temporary group account, then decrypts the ciphertext via the key obtained based on the temporary password, to obtain the temporary identity information, and accesses the group based on the temporary identity information. In this application, the access device is not required to be bound to an identity of the group member. This improves flexibility of group access.

## Description

This application claims priority to Chinese Patent Application No. 202310217130.X, filed with the China National Intellectual Property Administration on February 28, 2023 and entitled "GROUP ACCESS METHOD, APPARATUS, AND SYSTEM", which is incorporated herein by reference in its entirety.

### TECHNICAL FIELD

This application relates to the field of communication security, and in particular, to a group access method, apparatus, and system.

### BACKGROUND

Currently, in an end-to-end encryption (end-to-end encryption, E2EE) secure video conference, only a device bound to an identity of an attendee is allowed to access the conference, resulting in low flexibility.

### SUMMARY

This application provides a group access method, apparatus, and system, to improve flexibility of group access.

According to a first aspect, a group access method is provided, and the method is applied to an access device. The method includes: sending a temporary identity obtaining request to an identity management platform in response to receiving a group access instruction, where the group access instruction includes a temporary group account and a temporary password for logging in to the temporary group account, the temporary identity obtaining request includes the temporary group account, and the temporary group account indicates that the group access instruction requests to access a target group, and indicates a target group member that is in the target group and that registers the temporary group account; receiving a temporary identity obtaining response sent by the identity management platform, where the temporary identity obtaining response includes a temporary identity ciphertext corresponding to the temporary group account, the temporary identity ciphertext is obtained by the target group member by encrypting temporary identity information of the target group member via a key obtained based on the temporary password, and the temporary identity information includes a temporary identity public-private key pair held by the target group member and a first signature, for a public key in the temporary identity public-private key pair, via a long-term identity private key held by the target group member; obtaining the key based on the temporary password, and decrypting the temporary identity ciphertext via the key, to obtain the temporary identity information; and accessing the target group based on the temporary identity information.

In this application, the group member registers, by using a trusted device, the temporary group account used to access the group and the temporary password for logging in to the temporary group account, encrypts, via the key obtained based on the temporary password, the temporary identity information used by the temporary group account to access the group, and stores the ciphertext of the temporary identity information on the identity management platform. When the group member accesses the group by using another device, the access device first obtains the registered temporary group account and temporary password, obtains the corresponding ciphertext of the temporary identity information from the identity management platform based on the temporary group account, then decrypts the ciphertext via the key obtained based on the temporary password, to obtain the temporary identity information, and accesses the group based on the temporary identity information. In this application, the access device is not required to be bound to an identity of the group member. This improves flexibility of group access.

Optionally, an implementation in which the access device accesses the target group based on the temporary identity information includes: The access device sends identity authentication information to another group member in the target group, where the identity authentication information includes the public key in the temporary identity public-private key pair and the first signature.

In this application, the another group member in the target group may perform signature verification on the first signature via a long-term identity public key held by the target group member, to determine an identity of the target group member represented by the public key in the temporary identity public-private key pair, so as to perform authentication on an identity of a user who accesses the target group.

Optionally, the identity authentication information further includes a second signature, for the public key in the temporary identity public-private key pair held by the target group member, via a device private key held by the access device.

In this application, the another group member in the target group may perform signature verification on the second signature via the device public key held by the access device, to determine an identity of the device that accesses the target group, implement authentication on the identity of the device that accesses the target group, so as to determine a communication peer and a device used to access the target group. Compared with authentication on only the identity of the user, authentication on also the identity of the device makes communication of the group more secure.

Optionally, the temporary identity information further includes a group attribute of the temporary identity public-private key pair, the identity authentication information further includes the group attribute, the first signature is a signature for the public key in the temporary identity public-private key pair and the group attribute, and the group attribute is used to define access control permission for the temporary identity public-private key pair in the target group. The another group member in the target group may communicate with the access device based on the group attribute.

Optionally, an implementation in which the access device obtains the key based on the temporary password includes: The access device performs blind processing on the temporary password via a first random key, to obtain a first blind credential. The access device sends the first blind credential to the identity management platform. The access device receives a second blind credential sent by the identity management platform, where the second blind credential is obtained by the identity management platform by performing blind processing on the first blind credential via at least one random key. The access device performs de-blind processing on the second blind credential via the first random key, to obtain a third blind credential obtained by performing blind processing on the temporary password via the at least one random key. The access device generates the key based on the third blind credential by using a key derivation function.

In this implementation, the identity management platform needs to persistently store the random key used for blind processing. As long as the random key stored on the identity management platform and the temporary password of the user are not simultaneously leaked, an attacker cannot decipher the key obtained based on the temporary password of the user. Finally, security of a blind forgettable key derived from the random key stored on the identity management platform and the temporary password of the user can be ensured, transmission security and storage security of the temporary identity information that is of the target group member and that is encrypted via the key can further be improved, and a risk of leakage of the temporary identity information of the target group member can be reduced.

Optionally, the access device is a public device.

According to a second aspect, a group access method is provided, and the method is applied to a trusted device. The method includes: receiving an account registration instruction for a target group, where the account registration instruction includes a temporary group account and a temporary password for logging in to the temporary group account, the temporary group account indicates to access the target group and a target group member that is in the target group and that registers the temporary group account, and the trusted device stores a long-term identity public-private key pair held by the target group member; obtaining a key based on the temporary password, and encrypting temporary identity information of the target group member via the key, to obtain a temporary identity ciphertext corresponding to the temporary group account, where the temporary identity information includes a temporary identity public-private key pair generated by the trusted device and a signature, for a public key in the temporary identity public-private key pair, via a private key in the long-term identity public-private key pair; and sending a temporary identity storage request to an identity management platform, where the temporary identity storage request includes the temporary group account and the temporary identity ciphertext.

Optionally, the temporary identity information further includes a group attribute of the temporary identity public-private key pair, the signature is a signature for the public key in the temporary identity public-private key pair and the group attribute, and the group attribute is used to define access control permission for the temporary identity public-private key pair in the target group.

Optionally, the trusted device displays an access interface corresponding to the target group, where the access interface includes a login control and a registration control. An implementation in which the trusted device receives the account registration instruction for the target group includes: The trusted device receives the temporary group account and the temporary password that are entered through the registration control.

Optionally, the trusted device accesses the target group in response to receiving a selection instruction for the login control.

Optionally, an implementation in which the trusted device obtains the key based on the temporary password includes: The trusted device performs blind processing on the temporary password via a first random key, to obtain a first blind credential. The trusted device sends the first blind credential to the identity management platform. The trusted device receives a second blind credential sent by the identity management platform, where the second blind credential is obtained by the identity management platform by performing blind processing on the first blind credential via at least one random key. The trusted device performs de-blind processing on the second blind credential via the first random key, to obtain a third blind credential obtained by performing blind processing on the temporary password via the at least one random key. The trusted device generates the key based on the third blind credential by using a key derivation function.

According to a third aspect, a group access apparatus is provided, and the apparatus may be an access device. The apparatus includes a plurality of functional modules, and the plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided based on specific implementation.

According to a fourth aspect, a group access apparatus is provided, and the apparatus may be a trusted device. The apparatus includes a plurality of functional modules, and the plurality of functional modules interact with each other, to implement the method according to the second aspect and the implementations of the second aspect. The plurality of functional modules may be implemented based on software, hardware, or a combination of software and hardware, and the plurality of functional modules may be randomly combined or divided based on specific implementation.

According to a fifth aspect, a group access system is provided, including an access device, a trusted device, and an identity management platform, where the access device and the trusted device are separately communicatively connected to the identity management platform. The access device is configured to perform the method according to the first aspect and the implementations of the first aspect, and the trusted device is configured to perform the method according to the second aspect and the implementations of the second aspect.

According to a sixth aspect, a communication device is provided, including a processor and a memory. The memory is configured to store a computer program, where the computer program includes program instructions. The processor is configured to invoke the computer program, to implement the method according to the first aspect and the implementations of the first aspect, or the method according to the second aspect and the implementations of the second aspect.

According to a seventh aspect, a computer-readable storage medium is provided. The computer-readable storage medium stores instructions, and when the instructions are executed by a processor, the method according to the first aspect and the implementations of the first aspect, or the method according to the second aspect and the implementations of the second aspect is implemented.

According to an eighth aspect, a computer program product is provided, including a computer program. When the computer program is executed by a processor, the method according to the first aspect and the implementations of the first aspect, or the method according to the second aspect and the implementations of the second aspect is implemented.

According to a ninth aspect, a chip is provided. The chip includes a programmable logic circuit and/or program instructions. When the chip runs, the method according to the first aspect and the implementations of the first aspect, or the method according to the second aspect and the implementations of the second aspect is implemented.

### BRIEF DESCRIPTION OF DRAWINGS

FIG. 1 is a diagram of an application scenario according to an embodiment of this application;
FIG. 2 is a schematic flowchart of a group access method according to an embodiment of this application;
FIG. 3 is a diagram of a display interface according to an embodiment of this application;
FIG. 4 is a diagram of a structure of a group access apparatus according to an embodiment of this application;
FIG. 5 is a diagram of a structure of another group access apparatus according to an embodiment of this application; and
FIG. 6 is a diagram of a hardware structure of a communication device according to an embodiment of this application.

### DESCRIPTION OF EMBODIMENTS

To make objectives, technical solutions, and advantages of this application clearer, the following further describes implementations of this application in detail with reference to accompanying drawings.

Instant messaging is a service that can send and receive messages over the internet in real time. Instant messaging performed by a plurality of users is group communication, and two common scenarios of group communication are a non-real-time asynchronous interaction scenario and a real-time synchronous interaction scenario. The non-real-time asynchronous interaction scenario is mainly multi-party information interaction, for example, a group message communication service in an instant messaging application. The real-time synchronous interaction scenario is mainly multi-party real-time audio and video conferences such as a temporary small group conference and a scheduled large-scale organizational conference.

To ensure security of a message transmitted between the users in communication, encrypting communication data is a common processing method currently. For example, all communication nodes in a group use an agreed key to encrypt a sent message or decrypt a received message, to implement encrypted communication. Usually, a key used to encrypt a communication message in a group may be referred to as a shared key. The plurality of communication nodes in the group may be classified into a management node and a member node based on roles. The management node is responsible for generating the shared key and delivering the shared key to all member nodes. To ensure secure delivery of the shared key, the management node may negotiate a channel key with each member node, encrypt the shared key via the channel key obtained through negotiation, and then send the encrypted shared key to the corresponding member node. After receiving the encrypted shared key, the member node performs decryption via the channel key obtained through negotiation with the management node, to obtain the shared key, to securely distribute the shared key in the group. Then, the plurality of communication nodes in the group encrypt the communication message via the shared key, to implement E2EE secure communication.

A current E2EE secure communication solution is implemented based on identity and public key authentication management. In addition to the communication node, a public key authentication server is required in a communication system. In a group member registration phase, the group member sends, to the public key authentication server by using a device held by the group member, a long-term identity public key held by the group member, where the long-term identity public key indicates an identity of the group member in the group. The public key authentication server is configured to maintain a mapping relationship between the group member and the identity public key.

For example, an end-to-end identity authentication and key distribution process in group communication is as follows: (1) A device of a group administrator randomly generates a secure group session key. (2) A device of each group member (including the group administrator) retains a signed long-term identity public-private key pair in advance, where a long-term identity public key can indicate an identity of the corresponding group member. In a phase in which the group member registers a group account with the public key authentication server by using the device, the device uploads, to the public key authentication server, the long-term identity public key retained in advance, and the public key authentication server broadcasts the long-term identity public key. (3) In a group session initial phase, each device generates a temporarily negotiated public-private key pair, signs a temporarily negotiated public key via a long-term identity private key retained in advance, and broadcasts the signed temporarily negotiated public key via the public key authentication server. (4) Herein, the device of each group member has the long-term identity public key and the signed temporarily negotiated public key of another group member in the group. The device first uses the long-term identity public key of the another group member to authenticate authenticity of the temporarily negotiated public key. If the authentication succeeds, the device and the another device negotiate with each other via the temporarily negotiated public key held by the other party and a temporarily negotiated private key held by the device, to obtain a paired key, where the paired key may be used as the channel key for transmitting the shared key. (5) The device of the group administrator encrypts the group session key via the paired key between the device and the another device, and sends the group session key to the corresponding another device. In this way, distribution of the group session key is completed.

To help readers understand an identity authentication process, the following briefly describes the signature and signature verification. A signature is also referred to as a digital signature, and is a means to protect data of a sender. The sender signs a message via its private key, and any third party without the private key cannot forge a signature. Any third party with a public key corresponding to the private key held by the sender can perform verification on the signature, to confirm a source and integrity of the message. Signature verification is briefly referred to as verification. After receiving the data from the sender and the signature of the sender to the data, a receiver performs verification on the signature via the public key held by the sender and outputs a Boolean value, to indicate that the signature is valid (verification on the signature succeeds) or invalid (verification on the signature fails). If verification on the signature succeeds, the data is not tampered with. If verification on the signature fails, the data is tampered with. Signature verification can be used to verify data integrity (not tampered with) and reliability of a data source (not false data or forged data). In embodiments of this application, verification on the integrity of the data and the reliability of the data source is collectively referred to as verification on authenticity of the data.

In the E2EE secure communication solution, to implement end-to-end identity authentication, an identity credential (a long-term identity public-private key pair held by a person) representing a personal identity needs to be retained on the device in advance. In other words, the identity credential representing the personal identity needs to be persistently stored on the device, so that personal identities are bound to devices in a one-to-one mapping manner. In this case, only the device bound to the personal identity can access the group. For example, in an E2EE secure video conference, only a device bound to an identity of an attendee is allowed to access the conference, resulting in low flexibility. To avoid leakage of the identity credential, a user usually uses a trusted device held by the user to bind the personal identity. If the user expects to use a public device to access the group, the user needs to use the identity credential representing the personal identity on the public device. This may cause leakage of the identity credential, forward secrecy and post-compromise security cannot be met, and may cause leakage of group communication previously participated by using the identity credential and leakage of group communication subsequently participated by using the identity credential. Therefore, the current E2EE secure communication solution usually does not support access of a person by using a public device.

In view of this, this application provides a technical solution. When a group member expects to access a group by using a device not bound to a personal identity (for example, a public device), the group member may provide, for the device not bound to the personal identity through an identity management platform by using a device bound to the personal identity, a temporary identity credential that can represent the identity of the group member, so that the device not bound to the personal identity accesses the group by using the temporary identity credential. The device bound to the personal identity is a device that is registered with a device management platform and that can hold a long-term identity credential that can represent the personal identity. The device is usually held by the person that binds the identity. For the identity management platform, the device bound to the personal identity is a trusted device. The device not bound to the personal identity is a device that cannot hold the long-term identity credential that can represent the personal identity. For example, the device not bound to the personal identity may be a public device registered with the device management platform or an unknown device not registered with the device management platform. For the identity management platform, the device not bound to the personal identity is a non-fully trusted device. For example, the public device registered with the device management platform is a semi-trusted device, and the unknown device not registered with the device management platform is an untrusted device. The identity management platform may be an organization that can provide evidence of identity for a user. The device management platform may be an organization that can issue a digital certificate to a device.

In the technical solution provided in this application, the group member registers, by using the trusted device, a temporary group account used to access a group and a temporary password for logging in to the temporary group account, encrypts, via a key obtained based on the temporary password, temporary identity information used by the temporary group account to access the group, and stores ciphertext of the temporary identity information on the identity management platform. When the group member accesses the group by using another device, the access device first obtains the registered temporary group account and temporary password, obtains the corresponding ciphertext of the temporary identity information from the identity management platform based on the temporary group account, then decrypts the ciphertext via the key obtained based on the temporary password, to obtain the temporary identity information, and accesses the group based on the temporary identity information. The temporary identity information includes a temporary identity public-private key pair held by the group member and a signature, for a public key in the temporary identity public-private key pair, via a long-term identity private key held by the group member. Therefore, when the access device accesses the group based on the temporary identity information, another device in the group may perform signature verification on the signature via a long-term identity public key held by the group member. If verification on the signature succeeds, it indicates that the public key in the temporary identity public-private key pair can represent an identity of the group member, and the access device is allowed to access the group. In the solution of this application, end-to-end identity (end-to-end identity, E2EI) authentication is implemented on the device that accesses the group. The access device obtains the temporary identity information of the group member and accesses the group based on the information. Therefore, security of long-term identity information of the group member is ensured, and even if the temporary identity information is leaked on the access device, only the current group communication is affected. In addition, the long-term identity information of the group member is not leaked. Therefore, communication security of a group previously accessed by the group member based on the long-term identity information and a group subsequently accessed by the group member based on the long-term identity information can be ensured, to implement forward secrecy and post-compromise security. Therefore, the solution of this application may be applied to access of a non-fully trusted device in an E2EE secure communication scenario.

The following describes the technical solution of this application in detail from a plurality of perspectives such as an application scenario, a method procedure, a software apparatus, a hardware apparatus, and a system.

The following describes the application scenario of embodiments of this application by using an example.

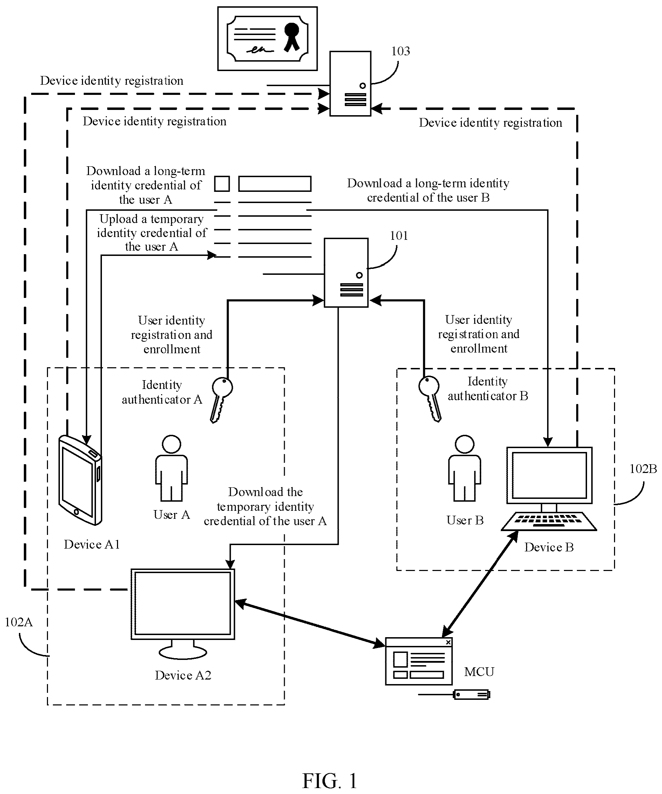

For example, FIG. 1 is a diagram of an application scenario according to an embodiment of this application. As shown in FIG. 1, the application scenario includes an identity management platform 101 and a plurality of communication parties 102A and 102B (collectively referred to as communication parties 102) in a group. A quantity of communication parties in the figure is merely used as an example for description, and is not intended to limit the application scenario in embodiments of this application.

The identity management platform 101 is an organization that can provide evidence of identity for a user, for example, is configured to: manage and persistently store a long-term identity credential of a group member, and provide an online credential retrieval function. The identity management platform 101 may alternatively be referred to as an identity provider (identity provider, IDP), for example, may be an identity credential management server (credential management server, CMS). The identity management platform 101 may be a server, a server cluster including a plurality of servers, or a cloud platform.

The communication party 102 in the group includes a device and a user. Refer to FIG. 1. The communication party 102A includes a device A1, a device A2, and a user A. The device A1 is a trusted device held by the user A, the device A2 is a non-fully trusted device that can be used by the user A to participate in group communication, and the user A may use the device A1 or the device A2 to access the group. The communication party 102B includes a device B and a user B, and the device B is a trusted device held by the user B. The user B may use device B to access the group.

Optionally, refer to FIG. 1. The application scenario further includes a multipoint control unit (multi control unit, MCU). After accessing the group, the devices are separately connected to the MCU, and the devices in the group communicate with each other by using the MCU. Certainly, the devices in the group may alternatively be directly communicatively connected to each other. This is not limited in this embodiment of this application.

Optionally, the application scenario shown in FIG. 1 may be any group communication scenario, including but not limited to a video conference scenario. For example, if the application scenario shown in FIG. 1 is the video conference scenario, in the application scenario shown in FIG. 1, the communication party 102 is a participant, the user of the communication party 102 is an attendee, and the device of the communication party 102 is a conference terminal. A form of the conference terminal may be a dedicated physical device, or may be a software program having a conference function. The software program may be run on various computing devices, for example, various user terminals such as a mobile phone, a tablet computer, or a computer. In this case, the computing device that runs the software program may also be considered as a conference terminal. The trusted conference terminal held by the attendee may be, for example, a personal mobile phone or a computer, and the non-fully trusted conference terminal may be, for example, a public conference terminal in a conference room.

Before group communication starts, the user of each communication party 102 in the group needs to complete identity registration and enrollment on the identity management platform 101. For example, the user A of the communication party 102A may perform identity registration on the identity management platform 101 by using an identity authenticator A, and store a user public-private key pair held by the user A as an identity credential of the user A in the identity authenticator A and/or on the identity management platform 101. Similarly, the user B of the communication party 102B may perform identity registration and enrollment on the identity management platform 101 by using an identity authenticator B, and store a user public-private key pair held by the user B as an identity credential of the user B in the identity authenticator B and/or on the identity management platform 101. The identity authenticator may be a terminal and an application (application, APP) installed on the terminal to apply for identity registration to the identity management platform 101, may be a universal serial bus (universal serial bus, USB) key (USB key), or may be another removable secure storage device that can be used to store long-term identity credentials of the user such as a private key and a digital certificate.

Optionally, an implementation in which the user performs identity registration on the identity management platform 101 includes: The identity authenticator of the user creates a user public-private key pair, and registers a user public key in the user public-private key pair with the identity management platform 101 according to an existing standard security protocol (including but not limited to a fast identity online (fast identity online, FIDO) 2 protocol). The identity authenticator may prove ownership of a user private key to the identity management platform 101 by signing a challenge value, to complete identity authentication, and locally store the registered user public-private key pair. The user private key can be used only after being unlocked locally. The user can unlock the local key by performing a friendly and secure operation, for example, performing fingerprint verification, entering a personal identification number (personal identification number, PIN), performing a voice operation through a microphone, inserting a USB key, or pressing a button. The FIDO 2 protocol is always designed to protect user privacy and does not provide an online service provider with information that can be used to track the user. After the user completes identity registration on the identity management platform 101, the user public key in the user public-private key pair generated by the identity authenticator of the user is authenticated by the identity management platform 101, and the user public-private key pair may be used as the long-term identity credential of the user. Further, the identity authenticator held by the user may securely store, on the identity management platform 101 according to an opaque protocol, the long-term identity credential representing the user identity. In other words, the identity management platform 101 may store a mapping relationship between the user identity and the long-term identity credential, to complete user identity enrollment. The long-term identity credential may be securely retrieved from the identity management platform 101 to the trusted device held by the user based on a password held by the user. The opaque protocol is an asymmetric password-authenticated key exchange protocol that can resist a pre-computation attack, combines an asymmetric password-authenticated key exchange (asynchronous password-authenticated key exchange, aPAKE) protocol and an oblivious pseudorandom function (oblivious pseudorandom function, OPRF). The opaque protocol is run, so that the user identity credential can be encrypted and stored on a server, and identity authentication can be completed by keeping the password locally. In this way, neither the server nor a communication operator can obtain or crack the user identity credential.

Optionally, the trusted device held by the user may be a mobile phone, a tablet computer, a computer, or the like of the user. The identity authenticator and the trusted device held by the user are logical units that can be distinguished, and may be physically integrated or independent. In other words, the identity authenticator and the trusted device held by the user may be a same physical device, or may be two independent physical devices. For example, the device A1 and the identity authenticator A in the application scenario shown in FIG. 1 are two independent devices, or the device A1 and the identity authenticator A may actually be a same device. This is not limited in this embodiment of this application.

Before the group communication starts, the group member completes identity registration on the identity management platform 101. Therefore, a group administrator may select, based on the registration information on the identity management platform 101, a person participating in the group communication.

Optionally, still refer to FIG. 1. The application scenario further includes a device management platform 103. The device management platform 103 is an organization that can issue a digital certificate to the device, for example, may be a public key infrastructure (public key infrastructure, PKI) or a certificate authority (certification authority, CA). The device management platform 103 may be a server, a server cluster including a plurality of servers, or a cloud platform.

Before the group communication starts, the trusted device held by the user of each communication party 102 in the group may complete identity registration on the device management platform 103. For example, refer to FIG. 1. The device A1 of the communication party 102A may perform identity registration on the device management platform 103, and the device management platform 103 issues a digital certificate A1 to the device A1. The digital certificate A1 includes device information of the device A1 and a signature of the device management platform 103 to the device information. The device information of the device A1 includes a public key in a device public-private key pair held by the device A1 (briefly referred to as a device public key). Optionally, the device information of the device A1 further includes a device identifier of the device A1. Similarly, the device B of the communication party 102B may perform identity registration on the device management platform 103, and the device management platform 103 issues a digital certificate B to the device B. The digital certificate B includes device information of the device B and a signature of the device management platform 103 to the device information. The device information of the device B includes a public key in a device public-private key pair held by the device B. Optionally, the device information of the device B further includes a device identifier of the device B. Optionally, a device identifier of a device includes but is not limited to one or more of a device serial number, a medium access control (Media Access Control, MAC) address of the device, or an internet protocol (Internet Protocol, IP) address of the device.

Optionally, the user is allowed to complete identity registration on the device management platform 103 by using the non-fully trusted device participating in the group communication. For example, refer to FIG. 1. The device A2 of the communication party 102A may perform identity registration on the device management platform 103, and the device management platform 103 issues a digital certificate A2 to the device A2. The digital certificate A2 includes device information of the device A2 and a signature of the device management platform 103 to the device information. The device information of the device A2 includes a public key in a device public-private key pair held by the device A2 (briefly referred to as a device public key). Optionally, the device information of the device A2 further includes a device identifier of the device A2. A non-fully trusted device that completes identity registration on the device management platform 103 is a semi-trusted device, and a non-fully trusted device that does not complete identity registration on the device management platform 103 is an untrusted device.

Optionally, an implementation in which a device performs identity registration on the device management platform 103 includes: The device locally generates a device public-private key pair, generates a certificate signing request (certificate signing request, CSR) based on a device public key in the device public-private key pair, and sends the CSR to the device management platform 103, to obtain a digital certificate of the device from the device management platform 103. The digital certificate includes the device public key in the device public-private key pair generated by the device and a signature of the device management platform 103 to the device public key. After the device completes identity registration on the device management platform 103, the device public key in the device public-private key pair locally generated by the device is authenticated by the device management platform 103, and the device may store the device public-private key pair and use the device public-private key pair as a long-term identity credential of the device. Optionally, the device management platform 103 stores a correspondence between a device identifier of the device that completes identity registration and the digital certificate issued by the device management platform 103 to the device.

It should be noted that an identity registration phase and a group access phase are independent of each other. After completing identity registration once, the device or the user may use a long-term identity public-private key pair obtained through the identity registration in subsequent plurality of times of group communication.

The solution provided in this embodiment of this application supports the user in accessing the E2EE secure group communication by using the non-fully trusted device. For example, in the application scenario shown in FIG. 1, after the user A completes identity registration and enrollment on the identity management platform 101 by using the identity authenticator A, the identity management platform 101 stores the long-term identity credential of the user A. The device A1 may download the long-term identity credential of the user A from the identity management platform 101, and access the group by using the long-term identity credential of the user A. Similarly, after the user B completes identity registration and enrollment on the identity management platform 101 by using the identity authenticator B, the identity management platform 101 stores the long-term identity credential of the user B. The device B may download the long-term identity credential of the user B from the identity management platform 101, and access the group by using the long-term identity credential of the user B. When the user A expects to access a group by using the device A2, the user A may first register, by using the device A1, a temporary group account and a temporary password for logging in to the temporary group account. In addition, the device A1 uploads, to the identity management platform 101, a temporary identity credential that can represent the identity of the user A and that is used by the temporary group account, and the temporary identity credential is signed by using the long-term identity credential of the user A. Then, the user A provides the temporary group account and the temporary password for the device A2, so that the device A2 can download the temporary identity credential from the identity management platform 101, and then the device A2 accesses the group by using the temporary identity credential. In this application, an implementation in which the non-fully trusted device accesses the group is described in detail by using the following method embodiment.

The following describes a method procedure in embodiments of this application by using an example.

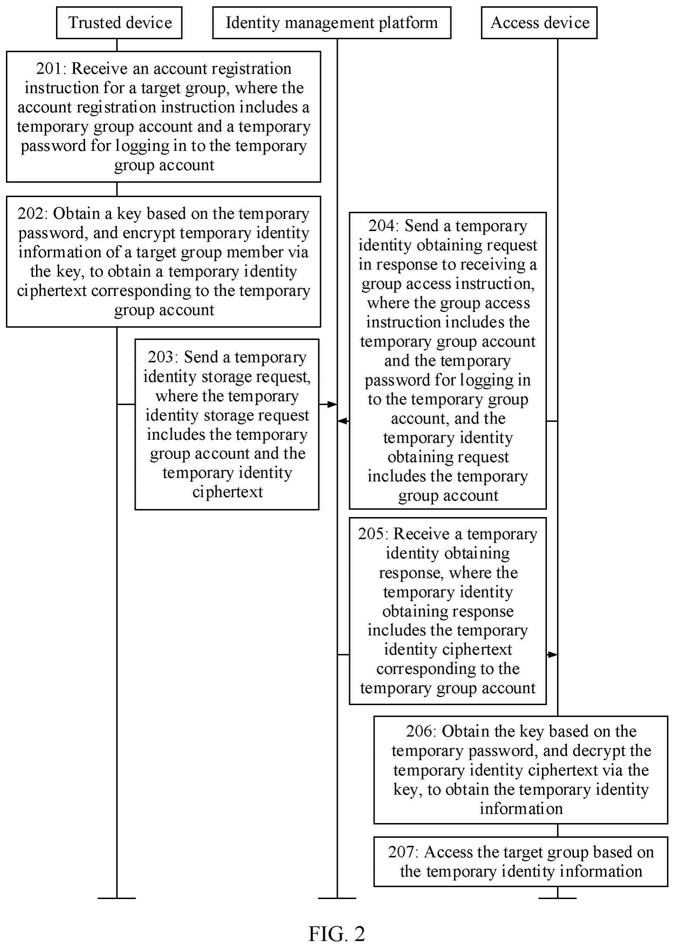

For example, FIG. 2 is a schematic flowchart of a group access method according to an embodiment of this application. As shown in FIG. 2, the method includes but is not limited to step 201 to step 207. Step 201 to step 203 show a process in which a group member stores a temporary identity credential on an identity management platform by using a trusted device, and step 204 to step 206 show a process in which the group member obtains the temporary identity credential from the identity management platform by using an access device, and step 207 shows a process in which the group member accesses a target group by using the access device. Optionally, the method shown in FIG. 2 may be applied to the application scenario shown in FIG. 1. A target group member shown in FIG. 2 may be, for example, the user A in FIG. 1, and the trusted device shown in FIG. 2 is a trusted device held by the target group member, for example, may be the device A1 in FIG. 1. The access device shown in FIG. 2 is a device used by the target group member to access the target group, and the access device herein is mainly a non-fully trusted device, for example, may be the device A2 in FIG. 1.

Step 201: The trusted device receives an account registration instruction for the target group, where the account registration instruction includes a temporary group account and a temporary password for logging in to the temporary group account.

The temporary group account indicates to access the target group and the target group member that is in the target group and that registers the temporary group account. In other words, one temporary group account corresponds to a specified group member in a specified group. The temporary group account may be indicated by using a group identifier of the target group and a user identifier of the target group member. For example, the group account of the target group is Conf(id), the user identifier of the target group member is U(id), and the temporary group account may be indicated by U(id)@Conf(id). In this case, the temporary group account may indicate that the temporary group account is used to access the target group, and a group member that is in the target group and that registers the temporary group account is the target group member. Alternatively, the temporary group account may include a string of low-entropy and easy-to-remember numbers, letters, characters, or a combination thereof, provided that the temporary group account is unique in an entire system. In this way, the temporary group account can uniquely correspond to the target group member in the target group. Optionally, the target group member is any group member that is in the target group and that expects to use a non-fully trusted device to access the group.

The trusted device stores a long-term identity public-private key pair held by the target group member. Optionally, when an identity authenticator and the trusted device that are held by the target group member are a same device, after the target group member completes identity registration on the identity management platform by using the identity authenticator, the trusted device obtains the long-term identity public-private key pair held by the target group member. When the identity authenticator and the trusted device that are held by the target group member are different devices, the trusted device may obtain, from the identity authenticator held by the target group member, the long-term identity public-private key pair held by the target group member. Optionally, the identity authenticator held by the target group member synchronizes information to the trusted device in a plurality of manners. For example, if the identity authenticator held by the target group member is a USB key that can be inserted, the identity authenticator may be locally inserted into the trusted device to synchronize the information. For another example, the identity authenticator held by the target group member may synchronize the information to the trusted device according to a security protocol. The security protocol includes but is not limited to a password-authenticated key exchange (password-authenticated key exchange, PAKE) protocol. For another example, the identity authenticator held by the target group member locally scans a QR code displayed by the trusted device or directly enters a string of characters displayed by the trusted device, establishes a secure channel with the trusted device according to a shared key-authenticated key exchange (authenticated key exchange, AKE) protocol, and then synchronizes the information to the trusted device over the secure channel. Alternatively, the trusted device may obtain, from the identity management platform, the long-term identity public-private key pair held by the target group member. For example, the identity authenticator held by the target group member securely stores the long-term identity public-private key pair on the identity management platform according to an opaque protocol, and the trusted device may securely retrieve the long-term identity public key pair from the identity management platform according to the opaque protocol and based on a personal password held by the target group member. An implementation in which the trusted device obtains the long-term identity public-private key pair held by the target group member is not limited in this embodiment of this application.

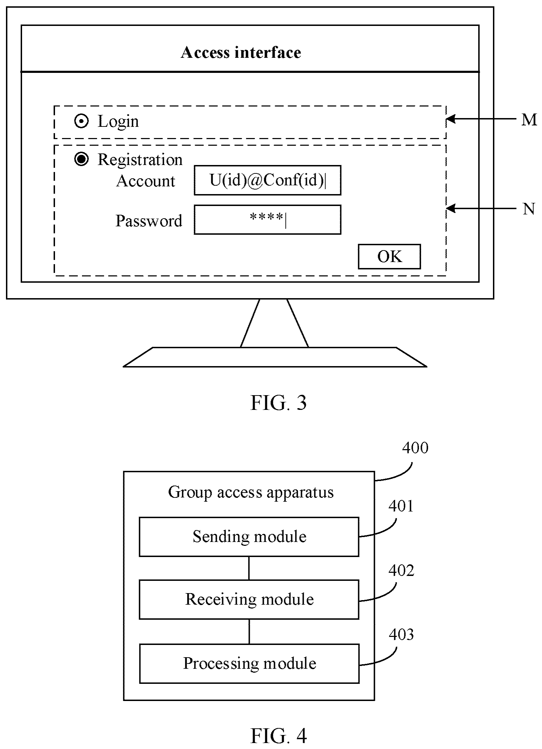

Optionally, the trusted device displays an access interface corresponding to the target group, and the access interface includes a login control and a registration control. An implementation in which the trusted device receives the account registration instruction for the target group may be that the trusted device receives the temporary group account and the temporary password that are entered through the registration control on the display interface. For example, FIG. 3 is a diagram of a display interface according to an embodiment of this application. As shown in FIG. 3, the access interface displayed by the trusted device includes a login control M and a registration control N. The login control M includes a login option, and the registration control N includes a registration option, an account input box, a password input box, and an OK option. Refer to FIG. 3. After the registration option is selected, the registered temporary group account may be entered into the account input box, and the temporary password for logging in to the temporary group account may be entered into the password input box. In response to receiving a selection instruction for the OK option, the trusted device determines that the account registration instruction is received.

In this embodiment of this application, in addition to assisting another device in accessing the target group, the trusted device may also be configured to access the target group. For example, the trusted device accesses the target group in response to receiving a selection instruction for the login control on the display interface. In this case, the trusted device may access the target group via the long-term identity public-private key pair held by the target group member.

Step 202: The trusted device obtains a key based on the temporary password, and encrypts temporary identity information of the target group member via the key, to obtain a temporary identity ciphertext corresponding to the temporary group account.

The temporary identity information of the target group member includes a temporary identity public-private key pair generated by the trusted device and a signature, for a public key in the temporary identity public-private key pair, via a private key in the long-term identity public-private key pair held by the target group member. For ease of description, herein, the signature, for the public key in the temporary identity public-private key pair generated by the trusted device, via the private key in the long-term identity public-private key pair held by the target group member is referred to as a first signature. After receiving the account registration instruction for the target group, the trusted device generates the temporary identity public-private key pair, and signs the public key in the temporary identity public-private key pair via the private key in the long-term identity public-private key pair held by the target group member, so that the public key in the temporary identity public-private key pair can represent an identity of the target group member in the target group. In other words, the temporary identity public-private key pair generated by the trusted device may be considered as a temporary identity public-private key pair held by the target group member.

Optionally, the temporary identity information of the target group member further includes a group attribute of the temporary identity public-private key pair. Correspondingly, the first signature is a signature for the public key in the temporary identity public-private key pair and the group attribute. To be specific, the first signature is a serial-parallel signature, for the public key in the temporary identity public-private key pair and the group attribute of the temporary identity public-private key pair, via the private key in the long-term identity public-private key pair held by the target group member. The group attribute of the temporary identity public-private key pair is used to define access control permission for the temporary identity public-private key pair in the target group. The access control permission includes but is not limited to use time permission, data access permission, or group control permission. The use time permission is used to perform life cycle management on the temporary identity public-private key pair. The use time permission may be a specified validity period of the temporary identity public-private key pair. For example, the validity period may be holding time of the target group, that is, the temporary identity public-private key pair is a one-time-pad temporary identity credential. The data access permission may be a specified data access strategy for accessing the group via the temporary identity public-private key pair. For example, information of a plurality of confidentiality levels is included in group communication, and only information of a lowest confidentiality level can be received when the group is accessed via the temporary identity public-private key pair. The group control permission may be a specified group control strategy for accessing the group via the temporary identity public-private key pair. For example, screen and voice recording and desktop sharing are not supported when the group is accessed via the temporary identity public-private key pair.

Optionally, there are a plurality of implementations of obtaining the key based on the temporary password by the trusted device. For example, the trusted device may generate, by running the opaque protocol with the identity management platform, the key corresponding to the temporary password, or the trusted device may directly obtain the key through derivation based on the temporary password by using a key derivation function.

Optionally, a specific implementation process of generating, by the trusted device by running the opaque protocol with the identity management platform, the key corresponding to the temporary password includes: The trusted device performs blind processing on the temporary password via a first random key, to obtain a first blind credential. The trusted device sends the first blind credential to the identity management platform. The trusted device receives a second blind credential sent by the identity management platform, where the second blind credential is obtained by the identity management platform by performing blind processing on the first blind credential via at least one random key. The trusted device performs de-blind processing on the second blind credential via the first random key, to obtain a third blind credential obtained by performing blind processing on the temporary password via the at least one random key of the identity management platform. The trusted device generates the key based on the third blind credential by using the key derivation function. That the identity management platform performs blind processing on the first blind credential via the at least one random key, to obtain the second blind credential may be understood as that if the identity management platform has only one server, the server may perform blind processing on the first blind credential via one random key, to obtain the second blind credential; or if the identity management platform includes a plurality of servers, the plurality of servers may sequentially perform blind processing on the first blind credential via one random key generated by each of the plurality of servers, to obtain the second blind credential, that is, the second blind credential may be obtained by the plurality of servers by performing multi-blind processing on the first blind credential via the random keys generated by the plurality of servers. For example, the identity management platform includes a server A and a server B. The server A may perform blind processing on the first blind credential via one random key, to obtain an intermediate blind credential. The server B then performs blind processing on the intermediate blind credential via one random key, to obtain the second blind credential.

In this implementation, the identity management platform needs to persistently store the random key used for blind processing. As long as the random key stored on the identity management platform and the temporary password of the user are not simultaneously leaked, an attacker cannot decipher the key obtained based on the temporary password of the user. Finally, security of a blind forgettable key derived from the random key stored on the identity management platform and the temporary password of the user can be ensured, transmission security and storage security of the temporary identity information that is of the target group member and that is encrypted via the key can further be improved, and a risk of leakage of the temporary identity information of the target group member can be reduced.

Step 203: The trusted device sends a temporary identity storage request to the identity management platform, where the temporary identity storage request includes the temporary group account and the temporary identity ciphertext.

After receiving the temporary identity storage request, the identity management platform stores a mapping relationship between the temporary group account and the temporary identity ciphertext.

Optionally, after the target group member in the target group stores the temporary group account and the temporary identity ciphertext on the identity management platform by using the held trusted device, the target group member may access the target group by using the access device. For a specific implementation process, refer to the following step 204 to step 207. The access device and the trusted device are not a same device. Optionally, the access device is a public device.

Step 204: The access device sends a temporary identity obtaining request to the identity management platform in response to receiving a group access instruction, where the group access instruction includes the temporary group account and the temporary password for logging in to the temporary group account, and the temporary identity obtaining request includes the temporary group account.

The temporary group account in the group access instruction indicates that the group access instruction requests to access the target group, and indicates the target group member that is in the target group and that registers the temporary group account. The temporary group account and the temporary password in the group access instruction are the same as the temporary group account and the temporary password in the account registration instruction in step 201, that is, after registering, by using the trusted device, the temporary group account and the temporary password for logging in to the temporary group account, the target group member may log in to the temporary group account on the access device based on the temporary password.

Optionally, the access device may obtain the entered temporary group account and the temporary password through a user input operation, or the access device may obtain the temporary group account and the temporary password from the trusted device. For example, the user locally scans a QR code displayed on the access device by using the trusted device, to establish a secure channel between the trusted device and the access device according to a shared key-AKE protocol, and then, the trusted device synchronizes the temporary group account and the temporary password to the access device over the secure channel. A manner in which the access device obtains the temporary group account and the temporary password is not limited in this embodiment of this application, that is, a manner of triggering the group access instruction is not limited.

Step 205: The access device receives a temporary identity obtaining response sent by the identity management platform, where the temporary identity obtaining response includes the temporary identity ciphertext corresponding to the temporary group account.

The identity management platform stores the mapping relationship between the temporary group account and the temporary identity ciphertext. Therefore, after receiving the temporary identity obtaining request sent by the access device, the identity management platform may provide, for the access device, the temporary identity ciphertext that corresponds to the temporary group account and that is carried in the temporary identity obtaining request. For content and a manner of generating the temporary identity ciphertext, refer to the related descriptions in step 202. Details are not described herein again in this embodiment of this application.

Step 206: The access device obtains the key based on the temporary password, and decrypts the temporary identity ciphertext via the key, to obtain the temporary identity information.

An implementation of obtaining, by the access device, the key based on the temporary password is consistent with the implementation of obtaining, by the trusted device, the key based on the temporary password in step 202. In this way, the access device may obtain the key used by the trusted device to encrypt the temporary identity information of the target group member, and decrypts, via the key, the temporary identity ciphertext stored by the trusted device on the identity management platform, to obtain the temporary identity information.

Step 207: The access device accesses the target group based on the temporary identity information.

Optionally, an implementation of step 207 includes: The access device sends identity authentication information to another group member in the target group, where the identity authentication information includes the public key in the temporary identity public-private key pair in the temporary identity information of the target group member and the first signature, obtained by the trusted device for the public key in the temporary identity public-private key pair via the private key in the long-term identity public-private key pair held by the target group member. The another group member in the target group may perform signature verification on the first signature via a long-term identity public key held by the target group member, to determine an identity of the target group member represented by the public key in the temporary identity public-private key pair, so as to perform authentication on an identity of a user who accesses the target group. For example, in an application scenario shown in FIG. 1, the user A accesses the group by using the device A2, and the device B may perform verification, via the long-term identity public key held by the user A, the temporary identity public key that is with a signature and that is sent by the device A2, to determine whether a user who accesses the group is the user A.

Optionally, when the access device completes identity registration on the device management platform, the identity authentication information may further include a second signature, for the public key in the temporary identity public-private key pair, via a device private key held by the access device. The another group member in the target group may perform signature verification on the second signature via a device public key held by the access device, to determine an identity of the device that accesses the target group, implement authentication on the identity of the device that accesses the target group, so as to determine a communication peer and a device used to access the target group. Compared with authentication on only the identity of the user, authentication on also the identity of the device makes communication of the group more secure. In this case, the identity authentication information may further include a device certificate of the access device, or another group member in the target group may obtain the device certificate of the access device in an out-of-band mode, to obtain the device public key of the access device in the device certificate.

Optionally, when the temporary identity information of the target group member includes the group attribute of the temporary identity public-private key pair, the identity authentication information further includes the group attribute, so that another group member in the target group can communicate with the access device based on the group attribute.

Optionally, the identity authentication information sent by the access device to the another group member in the target group may be carried in a key agreement message, the first signature is used to perform identity authentication on the user who accesses the group, and the temporary identity public key is used for key agreement. For example, the access device carries the identity authentication information in the key agreement message sent to a group administrator, to agree on a paired key between the access device and the group administrator, so that the group administrator distributes, to the access device, a shared key used for group communication.

A sequence of the steps of the foregoing group access method provided in embodiments of this application can be properly adjusted, and the steps can also be correspondingly added or deleted based on a situation. Any method variation readily figured out by any person skilled in the art within the technical scope disclosed in this application shall fall within the protection scope of this application.

In the group access method provided in embodiments of this application, the group member registers, by using the trusted device, the temporary group account used to access the group and the temporary password for logging in to the temporary group account, encrypts, via the key obtained based on the temporary password, the temporary identity information used by the temporary group account to access the group, and stores the ciphertext of the temporary identity information on the identity management platform. When the group member accesses the group by using another device, the access device first obtains the registered temporary group account and temporary password, obtains the corresponding ciphertext of the temporary identity information from the identity management platform based on the temporary group account, then decrypts the ciphertext via the key obtained based on the temporary password, to obtain the temporary identity information, and accesses the group based on the temporary identity information. The temporary identity information includes the temporary identity public-private key pair held by the group member and the signature, for the public key in the temporary identity public-private key pair, via the long-term identity private key held by the group member. Therefore, when the access device accesses the group based on the temporary identity information, the another device in the group may perform signature verification on the signature via the long-term identity public key held by the group member. If verification on the signature succeeds, it indicates that the public key in the temporary identity public-private key pair can represent the identity of the group member, and the access device is allowed to access the group. In the solutions of this application, end-to-end identity authentication is implemented on the device that accesses the group. The access device obtains the temporary identity information of the group member and accesses the group based on the information. Therefore, security of long-term identity information of the group member is ensured, and even if the temporary identity information is leaked on the access device, only the current group communication is affected. In addition, the long-term identity information of the group member is not leaked. Therefore, communication security of a group previously accessed by the group member based on the long-term identity information and a group subsequently accessed by the group member based on the long-term identity information can be ensured, to implement forward secrecy and post-compromise security.

The following describes virtual apparatuses in embodiments of this application by using examples.

For example, FIG. 4 is a diagram of a structure of a group access apparatus according to an embodiment of this application. The apparatus is used in an access device. As shown in FIG. 4, the apparatus 400 includes but is not limited to a sending module 401, a receiving module 402, and a processing module 403.

The sending module 401 is configured to send a temporary identity obtaining request to an identity management platform in response to receiving a group access instruction, where the group access instruction includes a temporary group account and a temporary password for logging in to the temporary group account, the temporary identity obtaining request includes the temporary group account, and the temporary group account indicates that the group access instruction requests to access a target group, and indicates a target group member that is in the target group and that registers the temporary group account.

The receiving module 402 is configured to receive a temporary identity obtaining response sent by the identity management platform, where the temporary identity obtaining response includes a temporary identity ciphertext corresponding to the temporary group account, the temporary identity ciphertext is obtained by the target group member by encrypting temporary identity information of the target group member via a key obtained based on the temporary password, and the temporary identity information includes a temporary identity public-private key pair held by the target group member and a first signature, for a public key in the temporary identity public-private key pair, via a long-term identity private key held by the target group member.

The processing module 403 is configured to: obtain the key based on the temporary password, and decrypt the temporary identity ciphertext via the key, to obtain the temporary identity information.

The processing module 403 is further configured to access the target group based on the temporary identity information.

Optionally, the processing module 403 is specifically configured to send identity authentication information to another group member in the target group by using the sending module 401, where the identity authentication information includes the public key in the temporary identity public-private key pair and the first signature.

Optionally, the identity authentication information further includes a second signature, for the public key in the temporary identity public-private key pair, via a device private key held by the access device.

Optionally, the temporary identity information further includes a group attribute of the temporary identity public-private key pair, the identity authentication information further includes the group attribute, the first signature is a signature for the public key in the temporary identity public-private key pair and the group attribute, and the group attribute is used to define access control permission for the temporary identity public-private key pair in the target group.

Optionally, the processing module 403 is specifically configured to: perform blind processing on the temporary password via a first random key, to obtain a first blind credential; send the first blind credential to the identity management platform; receive a second blind credential sent by the identity management platform, where the second blind credential is obtained by the identity management platform by performing blind processing on the first blind credential via at least one random key; perform de-blind processing on the second blind credential via the first random key, to obtain a third blind credential obtained by performing blind processing on the temporary password via the at least one random key; and generate the key based on the third blind credential by using a key derivation function.

Optionally, the access device is a public device.

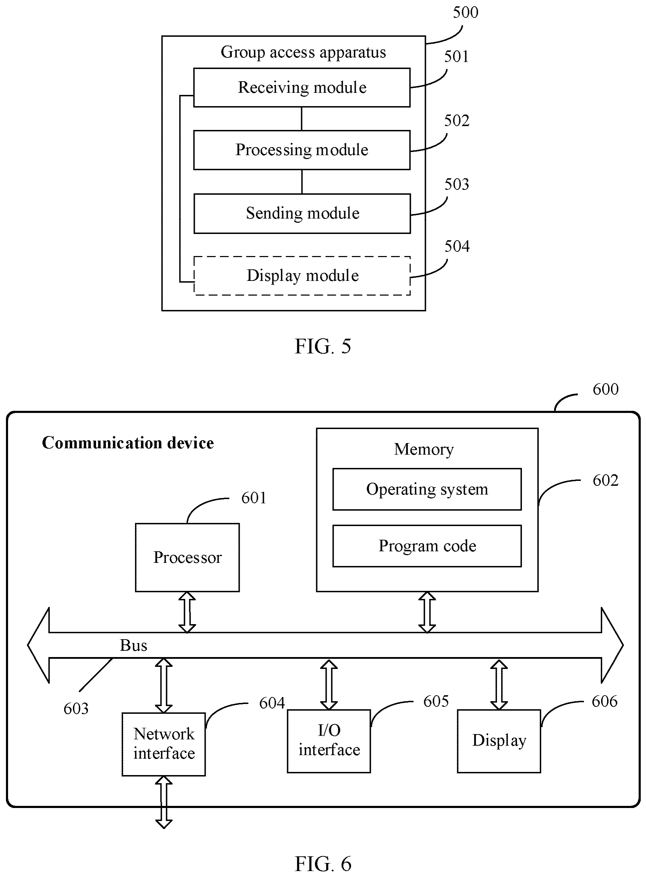

For another example, FIG. 5 is a diagram of a structure of another group access apparatus according to an embodiment of this application. The apparatus is used in a trusted device. As shown in FIG. 5, the apparatus 500 includes but is not limited to a receiving module 501, a processing module 502, and a sending module 503. Optionally, the apparatus 500 further includes a display module 504.

The receiving module 501 is configured to receive an account registration instruction for a target group, where the account registration instruction includes a temporary group account and a temporary password for logging in to the temporary group account, the temporary group account indicates to access the target group and a target group member that is in the target group and that registers the temporary group account, and the trusted device stores a long-term identity public-private key pair held by the target group member.

The processing module 502 is configured to: obtain a key based on the temporary password, and encrypt temporary identity information of the target group member via the key, to obtain a temporary identity ciphertext corresponding to the temporary group account, where the temporary identity information includes a temporary identity public-private key pair generated by the trusted device and a signature, for a public key in the temporary identity public-private key pair, via a private key in the long-term identity public-private key pair.

The sending module 503 is configured to send a temporary identity storage request to an identity management platform, where the temporary identity storage request includes the temporary group account and the temporary identity ciphertext.

Optionally, the temporary identity information further includes a group attribute of the temporary identity public-private key pair, the signature is a signature for the public key in the temporary identity public-private key pair and the group attribute, and the group attribute is used to define access control permission for the temporary identity public-private key pair in the target group.

Optionally, the display module 504 is configured to display an access interface corresponding to the target group, where the access interface includes a login control and a registration control. The receiving module 501 is configured to receive the temporary group account and the temporary password that are entered through the registration control.

Optionally, the processing module 502 is further configured to access the target group in response to receiving a selection instruction for the login control.

Optionally, the processing module 502 is specifically configured to: perform blind processing on the temporary password via a first random key, to obtain a first blind credential; send the first blind credential to the identity management platform; receive a second blind credential sent by the identity management platform, where the second blind credential is obtained by the identity management platform by performing blind processing on the first blind credential via at least one random key; perform de-blind processing on the second blind credential via the first random key, to obtain a third blind credential obtained by performing blind processing on the temporary password via the at least one random key; and generate the key based on the third blind credential by using a key derivation function.

For the apparatus in the foregoing embodiment, specific manners of executing operations by the modules are described in detail in embodiments related to the method, and details are not described herein.

The following describes a hardware apparatus in embodiments of this application by using an example.

For example, FIG. 6 is a diagram of a hardware structure of a communication device according to an embodiment of this application. The communication device may be the access device or the trusted device in the foregoing embodiments, for example, may be a conference terminal. As shown in FIG. 6, the communication device 600 includes a processor 601 and a memory 602. The memory 601 is connected to the memory 602 through a bus 603. FIG. 6 is described by using an example in which the processor 601 and the memory 602 are independent of each other. Optionally, the processor 601 and the memory 602 are integrated together. Optionally, with reference to FIG. 1, the communication device 600 in FIG. 6 may be a device of any communication party shown in FIG. 1.

The memory 602 is configured to store a computer program, and the computer program includes an operating system and program code. The memory 602 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disc storage, an optical disc storage, a magnetic disk, or another magnetic storage device.

The processor 601 is a general-purpose processor or a dedicated processor. The processor 601 may be a single-core processor or a multi-core processor. The processor 601 includes at least one circuit, to perform an action performed by the trusted device or the access device in the foregoing method provided in embodiments of this application.

Optionally, the communication device 600 further includes a network interface 604. The network interface 604 is connected to the processor 601 and the memory 602 through the bus 603. The network interface 604 can implement communication between the communication device 600 and another device. For example, the processor 601 can interact with another device through the network interface 604. For example, the access device interacts with an identity management platform through the network interface 604 to download a temporary identity credential, and the trusted device interacts with the identity management platform through the network interface 604 to upload a temporary identity credential.

Optionally, the communication device 600 further includes an input/output (input/output, I/O) interface 605. The I/O interface 605 is connected to the processor 601 and the memory 602 through the bus 603. The processor 601 can receive an entered command, data, or the like through the I/O interface 605. The I/O interface 605 is used by the communication device 600 to connect to input devices. The input devices are, for example, a keyboard and a mouse. Optionally, in some possible scenarios, the network interface 604 and the I/O interface 605 are collectively referred to as a communication interface.

Optionally, the communication device 600 further includes a display 606, and the display 606 is connected to the processor 601 and the memory 602 through the bus 603. The display 606 can be configured to display an intermediate result and/or a final result generated by the processor 601 by performing the foregoing method. In a possible implementation, the display 606 is a touchscreen, to provide a human-machine interaction interface.

The bus 603 is any type of communication bus configured to implement interconnection among internal components of the communication device 600, for example, a system bus. In this embodiment of this application, an example in which the foregoing components inside the communication device 600 are interconnected through the bus 603 is used for description. Optionally, the foregoing components inside the communication device 600 are communicatively connected to each other in a connection manner other than the bus 603. For example, the foregoing components inside the communication device 600 are interconnected through a logical interface inside the communication device 600.

The foregoing components may be separately disposed on chips that are independent of each other, or at least some or all of the components may be disposed on a same chip. Whether the components are separately disposed on different chips or integrated and disposed on one or more chips usually depends on a requirement of a product design. A specific implementation form of the foregoing components is not limited in this embodiment of this application.

The communication device 600 shown in FIG. 6 is merely an example. In an implementation process, the communication device 600 may further include other components, which are not enumerated one by one in this specification. The communication device 600 shown in FIG. 6 may implement group access by performing all or some steps of the method provided in the foregoing embodiments.

An embodiment of this application further provides a group access system, including an access device, a trusted device, and an identity management platform. The access device and the trusted device are separately communicatively connected to the identity management platform. The access device may be configured to perform step 204 to step 207 in the method shown in FIG. 2, and the trusted device may be configured to perform step 201 to step 203 in the method shown in FIG. 2. Optionally, the access device is a public device, and the trusted device is a personal trusted device.

An embodiment of this application further provides a computer-readable storage medium. The computer-readable storage medium stores instructions. When the instructions are executed by a processor, the steps performed by the trusted device or the steps performed by the access device in the foregoing method are implemented.

An embodiment of this application further provides a computer program product, including a computer program. When the computer program is executed by a processor, the steps performed by the trusted device or the steps performed by the access device in the foregoing method are implemented.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, terms "first", "second", and "third" are merely used for description, but shall not be understood as an indication or implication of relative importance.

A term "and/or" in this application describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects.

It should be noted that information (including but not limited to user equipment information and personal information of a user), data (including but not limited to data used for analysis, stored data, and presented data), and signals in this application are all used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A group access method, applied to an access device, wherein the method comprises:
sending a temporary identity obtaining request to an identity management platform in response to receiving a group access instruction, wherein the group access instruction comprises a temporary group account and a temporary password for logging in to the temporary group account, the temporary identity obtaining request comprises the temporary group account, and the temporary group account indicates that the group access instruction requests to access a target group, and indicates a target group member that is in the target group and that registers the temporary group account;
receiving a temporary identity obtaining response sent by the identity management platform, wherein the temporary identity obtaining response comprises a temporary identity ciphertext corresponding to the temporary group account, the temporary identity ciphertext is obtained by the target group member by encrypting temporary identity information of the target group member via a key obtained based on the temporary password, and the temporary identity information comprises a temporary identity public-private key pair held by the target group member and a first signature, for a public key in the temporary identity public-private key pair, via a long-term identity private key held by the target group member;
obtaining the key based on the temporary password, and decrypting the temporary identity ciphertext via the key, to obtain the temporary identity information; and
accessing the target group based on the temporary identity information.

2. The method according to claim 1, wherein accessing the target group based on the temporary identity information comprises:
sending identity authentication information to another group member in the target group, wherein the identity authentication information comprises the public key in the temporary identity public-private key pair and the first signature.

3. The method according to claim 2, wherein the identity authentication information further comprises a second signature, for the public key in the temporary identity public-private key pair, via a device private key held by the access device.

4. The method according to claim 2 or 3, wherein the temporary identity information further comprises a group attribute of the temporary identity public-private key pair, the identity authentication information further comprises the group attribute, the first signature is a signature for the public key in the temporary identity public-private key pair and the group attribute, and the group attribute is used to define access control permission for the temporary identity public-private key pair in the target group.

5. The method according to any one of claims 1 to 4, wherein obtaining the key based on the temporary password comprises:
performing blind processing on the temporary password via a first random key, to obtain a first blind credential;
sending the first blind credential to the identity management platform;
receiving a second blind credential sent by the identity management platform, wherein the second blind credential is obtained by the identity management platform by performing blind processing on the first blind credential via at least one random key;
performing de-blind processing on the second blind credential via the first random key, to obtain a third blind credential obtained by performing blind processing on the temporary password via the at least one random key; and
generating the key based on the third blind credential by using a key derivation function.

6. The method according to any one of claims 1 to 5, wherein the access device is a public device.

7. A group access method, applied to a trusted device, wherein the method comprises:
receiving an account registration instruction for a target group, wherein the account registration instruction comprises a temporary group account and a temporary password for logging in to the temporary group account, the temporary group account indicates to access the target group and a target group member that is in the target group and that registers the temporary group account, and the trusted device stores a long-term identity public-private key pair held by the target group member;
obtaining a key based on the temporary password, and encrypting temporary identity information of the target group member via the key, to obtain a temporary identity ciphertext corresponding to the temporary group account, wherein the temporary identity information comprises a temporary identity public-private key pair generated by the trusted device and a signature, for a public key in the temporary identity public-private key pair, via a private key in the long-term identity public-private key pair; and
sending a temporary identity storage request to an identity management platform, wherein the temporary identity storage request comprises the temporary group account and the temporary identity ciphertext.

8. The method according to claim 7, wherein the temporary identity information further comprises a group attribute of the temporary identity public-private key pair, the signature is a signature for the public key in the temporary identity public-private key pair and the group attribute, and the group attribute is used to define access control permission for the temporary identity public-private key pair in the target group.

9. The method according to claim 7 or 8, wherein the method further comprises:
displaying an access interface corresponding to the target group, wherein the access interface comprises a login control and a registration control; and
receiving the account registration instruction for the target group comprises:
receiving the temporary group account and the temporary password that are entered through the registration control.

10. The method according to claim 9, wherein the method further comprises:
accessing the target group in response to receiving a selection instruction for the login control.

11. The method according to any one of claims 7 to 10, wherein obtaining the key based on the temporary password comprises:
performing blind processing on the temporary password via a first random key, to obtain a first blind credential;
sending the first blind credential to the identity management platform;
receiving a second blind credential sent by the identity management platform, wherein the second blind credential is obtained by the identity management platform by performing blind processing on the first blind credential via at least one random key;
performing de-blind processing on the second blind credential via the first random key, to obtain a third blind credential obtained by performing blind processing on the temporary password via the at least one random key; and
generating the key based on the third blind credential by using a key derivation function.

12. A group access apparatus, used in an access device, wherein the apparatus comprises:
a sending module, configured to send a temporary identity obtaining request to an identity management platform in response to receiving a group access instruction, wherein the group access instruction comprises a temporary group account and a temporary password for logging in to the temporary group account, the temporary identity obtaining request comprises the temporary group account, and the temporary group account indicates that the group access instruction requests to access a target group, and indicates a target group member that is in the target group and that registers the temporary group account;
a receiving module, configured to receive a temporary identity obtaining response sent by the identity management platform, wherein the temporary identity obtaining response comprises a temporary identity ciphertext corresponding to the temporary group account, the temporary identity ciphertext is obtained by the target group member by encrypting temporary identity information of the target group member via a key obtained based on the temporary password, and the temporary identity information comprises a temporary identity public-private key pair held by the target group member and a first signature, for a public key in the temporary identity public-private key pair, via a long-term identity private key held by the target group member; and
a processing module, configured to: obtain the key based on the temporary password, and decrypt the temporary identity ciphertext via the key, to obtain the temporary identity information, wherein
the processing module is further configured to access the target group based on the temporary identity information.

13. The apparatus according to claim 12, wherein the processing module is configured to:
send identity authentication information to another group member in the target group by using the sending module, wherein the identity authentication information comprises the public key in the temporary identity public-private key pair and the first signature.

14. The apparatus according to claim 13, wherein the identity authentication information further comprises a second signature, for the public key in the temporary identity public-private key pair, via a device private key held by the access device.

15. The apparatus according to claim 13 or 14, wherein the temporary identity information further comprises a group attribute of the temporary identity public-private key pair, the identity authentication information further comprises the group attribute, the first signature is a signature for the public key in the temporary identity public-private key pair and the group attribute, and the group attribute is used to define access control permission for the temporary identity public-private key pair in the target group.

16. The apparatus according to any one of claims 12 to 15, wherein the processing module is configured to:
perform blind processing on the temporary password via a first random key, to obtain a first blind credential;
send the first blind credential to the identity management platform;
receive a second blind credential sent by the identity management platform, wherein the second blind credential is obtained by the identity management platform by performing blind processing on the first blind credential via at least one random key;
perform de-blind processing on the second blind credential via the first random key, to obtain a third blind credential obtained by performing blind processing on the temporary password via the at least one random key; and
generate the key based on the third blind credential by using a key derivation function.

17. The apparatus according to any one of claims 12 to 16, wherein the access device is a public device.

18. A group access apparatus, used in a trusted device, wherein the apparatus comprises:
a receiving module, configured to receive an account registration instruction for a target group, wherein the account registration instruction comprises a temporary group account and a temporary password for logging in to the temporary group account, the temporary group account indicates to access the target group and a target group member that is in the target group and that registers the temporary group account, and the trusted device stores a long-term identity public-private key pair held by the target group member;
a processing module, configured to obtain a key based on the temporary password, and encrypt temporary identity information of the target group member via the key, to obtain a temporary identity ciphertext corresponding to the temporary group account, wherein the temporary identity information comprises a temporary identity public-private key pair generated by the trusted device and a signature, for a public key in the temporary identity public-private key pair, via a private key in the long-term identity public-private key pair; and
a sending module, configured to send a temporary identity storage request to an identity management platform, wherein the temporary identity storage request comprises the temporary group account and the temporary identity ciphertext.

19. The apparatus according to claim 18, wherein the temporary identity information further comprises a group attribute of the temporary identity public-private key pair, the signature is a signature for the public key in the temporary identity public-private key pair and the group attribute, and the group attribute is used to define access control permission for the temporary identity public-private key pair in the target group.

20. The apparatus according to claim 18 or 19, wherein the apparatus further comprises a display module, wherein
the display module is configured to display an access interface corresponding to the target group, wherein the access interface comprises a login control and a registration control; and
the receiving module is configured to receive the temporary group account and the temporary password that are entered through the registration control.

21. The apparatus according to claim 20, wherein the processing module is further configured to:
access the target group in response to receiving a selection instruction for the login control.

22. The apparatus according to any one of claims 18 to 21, wherein the processing module is configured to:
perform blind processing on the temporary password via a first random key, to obtain a first blind credential;
send the first blind credential to the identity management platform;
receive a second blind credential sent by the identity management platform, wherein the second blind credential is obtained by the identity management platform by performing blind processing on the first blind credential via at least one random key;
perform de-blind processing on the second blind credential via the first random key, to obtain a third blind credential obtained by performing blind processing on the temporary password via the at least one random key; and
generate the key based on the third blind credential by using a key derivation function.

23. A group access system, comprising an access device, a trusted device, and an identity management platform, wherein the access device and the trusted device are separately communicatively connected to the identity management platform; and
the access device is configured to perform the method according to any one of claims 1 to 6, and the trusted device is configured to perform the method according to any one of claims 7 to 11.

24. A communication device, comprising a processor and a memory, wherein
the memory is configured to store a computer program, wherein the computer program comprises program instructions; and
the processor is configured to invoke the computer program, to implement the method according to any one of claims 1 to 11.

25. A computer-readable storage medium, wherein the computer-readable storage medium stores instructions, and when the instructions are executed by a processor, the method according to any one of claims 1 to 11 is implemented.

26. A computer program product, comprising a computer program, wherein when the computer program is executed by a processor, the method according to any one of claims 1 to 11 is implemented.
